(19) Europäisches Patentamt
European Patent Office
Office européen des brevets

(11) **EP 4 657 013 A1**

(12) **EUROPEAN PATENT APPLICATION**
published in accordance with Art. 153(4) EPC

(43) Date of publication:
**03.12.2025 Bulletin 2025/49**

(21) Application number: **23918528.3**

(22) Date of filing: **10.11.2023**

(51) International Patent Classification (IPC):
***G01B 11/08*** (2006.01)

(52) Cooperative Patent Classification (CPC):
**G01B 11/08**

(86) International application number:
**PCT/JP2023/040642**

(87) International publication number:
**WO 2024/157573 (02.08.2024 Gazette 2024/31)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **25.01.2023 JP 2023009516**

(71) Applicant: HITACHI HIGH-TECH CORPORATION
Tokyo 105-6409 (JP)

(72) Inventors:
• **MINEMURA Hiroyuki**
**Tokyo 100-8280 (JP)**
• **ANZAI Yumiko**
**Tokyo 100-8280 (JP)**

(74) Representative: **MERH-IP Matias Erny Reichl Hoffmann**
**Patentanwälte PartG mbB**
**Paul-Heyse-Straße 29**
**80336 München (DE)**

(54) **LIGHT MEASUREMENT DEVICE AND LIGHT MEASUREMENT METHOD**

(57) An object of the present invention is to provide a technique capable of suppressing distortion of image information associated with a temperature change or a temporal change of a scanning mirror without adding an optical system such as an angle sensor. A light measurement device according to the present invention generates first image information and second image information of a sample by scanning a light spot of a laser beam with respect to the sample in a first orientation and a second orientation opposite to the first orientation by a scanning mirror, and determines a correction amount for correcting an operation delay of the scanning mirror based on the first image information and the second image information (see

*FIG. 8*

$$C_{++} = \sum_{j=1}^{NY} \sum_{i=1}^{NX} (A_+[j][i] - \widehat{A_+}) \cdot (A_+[j][i] - \widehat{A_+})$$

$$C_{--} = \sum_{j=1}^{NY} \sum_{i=1}^{NX} (A_-[j][i] - \widehat{A_-}) \cdot (A_-[j][i] - \widehat{A_-})$$

$$C_{+-} = \sum_{j=1}^{NY} \sum_{i=1}^{NX} (A_+[j][i] - \widehat{A_+}) \cdot (A_-[j][i] - \widehat{A_-})$$

$$c = \frac{C_{+-}}{\sqrt{C_{++} \cdot C_{--}}}$$

EP 4 657 013 A1

## Description

Technical Field

The present invention relates to a technique for measuring a size of a particle in a liquid sample by using light.

Background Art

In recent years, pharmaceutical targets to be developed are shifting from low molecular weight drugs to biopharmaceuticals. The biopharmaceuticals are macromolecules and therefore are prone to aggregation. As a result, the biopharmaceuticals can lead to toxicity. For example, the United States Food and Drug Administration and the like are trying to enforce concentration control regulations of aggregates. Therefore, there is a need for a technique for quantitatively measuring a size distribution of a desired density for aggregates in a submicron region of 0.1 to 1 um. A protein aggregate floats in a solvent, and a position thereof changes over time due to Brownian motion. Hereinafter, in the present invention, a technique for measuring a size and a density of a protein aggregate and a standard particle such as a polystyrene bead will be described. These specimens are collectively referred to as "particles".

PTL 1 describes a technique for detecting a particle by using light measurement. PTL 1 discloses "a light measurement method for condensing light to generate a light spot and measuring a specimen having a size of about three times or less a size of the light spot, the method including a signal acquisition step of detecting reflected light reflected from the specimen by irradiating the specimen with at least a focal position of the light while moving the focal position in an optical axis direction, a step of acquiring correspondence relationship data describing a correspondence relationship between intensity of the reflected light and a size of the specimen, and a size calculation step of acquiring the size of the specimen by querying the correspondence relationship data by using the intensity of the reflected light" (claim 1). In the technique described in PTL 1, reflected light and reference light interfere with each other to enhance a signal, and thus, it is possible to realize high-resolution measurement without requiring pre-processing.

PTL 2 discloses a technique for scanning a light spot at a high speed by driving scanning mirrors in an X-axis direction and a Y-axis direction orthogonal to an optical axis not to be influenced by movement of a particle performing Brownian motion in a liquid based on the technique of PTL 1.

PTL 3 describes, in order to "suppress an error caused by a change in a scanning condition of a laser beam", that "X-axis scanning means 22 and Y-axis scanning means 23 drive an X-scanning mirror 18 and a Y-scanning mirror 19 according to a drive signal based on a predetermined scanning condition to scan with a laser beam and angle sensors 22b and 23b output a position signal corresponding to an irradiation position of the laser beam on a sample 13. In a state where the irradiation of the sample with the laser beam is suppressed (including stopped) compared to intensity at the time of observation by light transmittance variable means 16 that adjusts the irradiation of the sample 13 with the laser beam, a drive signal is supplied to the X-axis scanning means 22 and the Y-axis scanning means 23 to preliminarily drive the X-scanning mirror 18 and the Y-scanning mirror 19, a position signal is measured at a predetermined time, and a deviation time from a delay time of a position signal predicted in advance with respect to the drive signal is calculated. The present invention can be applied to, for example, a laser scanning microscope (see ABSTRACT).

Citation List

Patent Literature

PTL 1: JP 2017-102032 A
PTL 2: WO2020/144754
PTL 3: JP 2011-154312 A

Summary of Invention

Technical Problem

In a case where a size and a density of the protein aggregate are measured by the techniques described in PTL 1 and PTL 2, a resonance type galvanometer mirror or a non-resonance type galvanometer mirror is suitable as the scanning mirrors in the X-axis direction and the Y-axis direction. On the other hand, since these galvano mirrors are mechanical components, a spring constant, a resonance frequency, and the like change due to an influence of a temperature change or a temporal change, and thus, an operation delay amount changes. Since these changes distort image information generated from a detection signal stream obtained by scanning the light spot, there is a possibility that measurement accuracy is lowered due to the influence of the temperature change or the temporal change. In order to suppress this influence, it is considered that a technique using the angle sensor described in PTL 3 is applied.

In the techniques described in PTL 1 and PTL 2, the particle in the liquid to be measured is irradiated with the laser beam, three-dimensional image information is generated from the reflected light, and size information of a target particle is measured. The reflected light, which has the same wavelength as a wavelength of a light source and has extremely weak intensity, is converted into reflected light. Accordingly, in a case where the technique using the angle sensor described in PTL 3 is combined with PTL 1 and PTL 2 to add the angle sensor of the laser beam deflected by the galvano mirror and also add the optical system associated therewith, it is difficult to avoid a decrease in measurement accuracy due to the influence of generated stray light. Accordingly, it is considered that the technique of PTL 3 is not appropriate in PTL 1 and PTL 2 to suppress the influence of the temperature or the temporal change.

The present invention has been made in view of the above problems, and an object of the present invention is to provide a technique capable of suppressing distortion of image information that may occur along with a temperature change or a temporal change of a scanning mirror without adding an optical system such as an angle sensor.

Solution to Problem

A light measurement device according to the present invention generates first image information and second image information of a sample by scanning a light spot of a laser beam irradiated to the sample in a first orientation and a second orientation opposite to the first orientation using a scanning mirror, and determines a correction amount for correcting an operation delay of the scanning mirror based on the first image information and the second image information.

Advantageous Effects of Invention

According to the present invention, it is possible to suppress the distortion of the image information that may occur with the temperature change or the temporal change of the galvano mirror without adding the optical system such as the angle sensor. Other objects, configurations, and effects will be made apparent in the following descriptions.

Brief Description of Drawings

[FIG. 1] FIG. 1 is a schematic view illustrating a relationship between defocus, a detection signal, and a particle size in the technique described in PTL 1.
[FIG. 2] FIG. 2 is a simulation result illustrating a relationship between a particle diameter and signal intensity.
[FIG. 3A] FIG. 3A is a schematic view illustrating a container to which a solvent containing a particle to be measured is input, an optical system, and a signal processing system.
[FIG. 3B] FIG. 3B illustrates a configuration in a case where a test sample in which a region mark is made of metal on a back surface of a transparent flat plate 202 instead of a sample 204 is observed.
[FIG. 4A] FIG. 4A is an enlarged view of image information of the region mark of the test sample.
[FIG. 4B] FIG. 4B is an enlarged view of the image information of the region mark of the test sample.
[FIG. 5A] FIG. 5A is a transcription of FIG. 1 in PTL 3.
[FIG. 5B] FIG. 5B is a transcription of FIG. 2 in PTL 3.
[FIG. 6A] FIG. 6A is a diagram schematically illustrating a temporal change of a drive signal or a monitor signal of a scanning mirror.
[FIG. 6B] FIG. 6B is a diagram schematically illustrating a temporal change of a drive signal or a monitor signal of a scanning mirror suitable in the present invention.
[FIG. 7A] FIG. 7A is a diagram illustrating a detailed configuration of a sample container suitable in the present invention, and a frame and a base plate provided in a device.
[FIG. 7B] FIG. 7B is a schematic view illustrating a relationship between a sample container 703 and a base plate 701.
[FIG. 8] FIG. 8 is a schematic view illustrating a configuration of a processing system that generates image information from a detection signal in the embodiment.
[FIG. 9] FIG. 9 is a schematic view illustrating data conversion of the processing system that generates the image information from the detection signal.
[FIG. 10A] FIG. 10A is XY image information of the base plate 701 obtained based on the processing system of the embodiment.
[FIG. 10B] FIG. 10B is the XY image information of the base plate 701 obtained based on the processing system of the embodiment.

[FIG. 10C] FIG. 10C is the XY image information of the base plate 701 obtained based on the processing system of the embodiment.

[FIG. 11A] FIG. 11A is the XY image information of the base plate 701 obtained based on the processing system of the embodiment.

[FIG. 11B] FIG. 11B is the XY image information of the base plate 701 obtained based on the processing system of the embodiment.

[FIG. 11C] FIG. 11C is the XY image information of the base plate 701 obtained based on the processing system of the embodiment.

[FIG. 12A] FIG. 12A is the XY image information of the base plate 701 obtained based on the processing system of the embodiment.

[FIG. 12B] FIG. 12B is the XY image information of the base plate 701 obtained based on the processing system of the embodiment.

[FIG. 12C] FIG. 12C is the XY image information of the base plate 701 obtained based on the processing system of the embodiment.

[FIG. 13A] FIG. 13A is an experimental result illustrating a relationship between a correction amount of an operation delay of a scanning mirror in an X-axis direction and a correlation coefficient between ImageX+ and ImageX-.

[FIG. 13B] FIG. 13B is another experimental result illustrating the relationship between the correction amount of the operation delay of the scanning mirror in the X-axis direction and the correlation coefficient between ImageX+ and ImageX-.

[FIG. 14] FIG. 14 is an experimental result illustrating a relationship between a correction amount of an operation delay of a scanning mirror in a Y-axis direction and a correlation coefficient between ImageY+ and ImageY-.

[FIG. 15A] FIG. 15A is an experimental result illustrating the relationship between the correction amount of the operation delay of the scanning mirror in the X-axis direction and the correlation coefficient between ImageX+ and ImageX-.

[FIG. 15B] FIG. 15B is an experimental result illustrating the relationship between the correction amount of the operation delay of the scanning mirror in the Y-axis direction and the correlation coefficient between ImageY+ and ImageY-.

[FIG. 16] FIG. 16 is a flowchart illustrating a flow of measurement according to the embodiment.

[FIG. 17] FIG. 17 is another flowchart illustrating the flow of the measurement according to the embodiment.

[FIG. 18] FIG. 18 is image information obtained in a case where the correction amount of the operation delay of the scanning mirror is updated in an edge portion of the sample container.

[FIG. 19] FIG. 19 is a schematic view illustrating a configuration of a light measurement device that measures a particle size distribution.

[FIG. 20] FIG. 20 is a schematic view illustrating temporal changes in a power of a laser beam and ae position of a light spot according to the flow of FIG. 16.

[FIG. 21] FIG. 21 is a flowchart for explaining a procedure for determining a correction amount by using the sample of FIG. 18.

Description of Embodiments

<First Embodiment: Problems of Related Art>

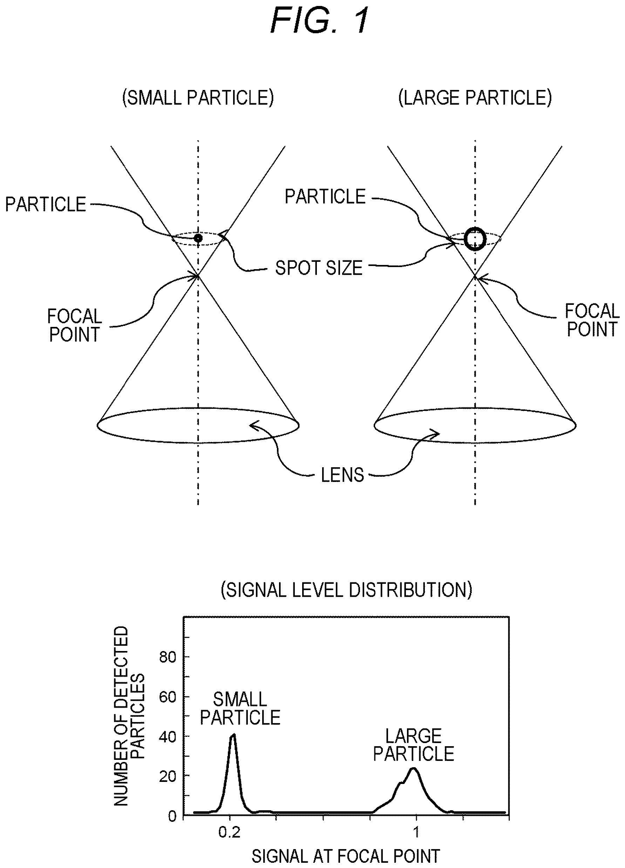

FIG. 1 is a schematic view illustrating a relationship between defocus, a detection signal, and a particle size in the technique described in PTL 1. An upper left part of FIG. 1 geometrically illustrates an optical system in a case where there is defocus with respect to a relatively small particle. A geometric spot size of the particle at a z position (coordinate along an optical axis) is geometrically determined by a numerical aperture of an objective lens and a defocus amount. The detection signal is attenuated in accordance with a ratio of a projected area of the particle within an area of a geometric beam. The ratio of the projected area corresponds to a reaction sectional area of light reflection. An upper right part of FIG. 1 is a schematic view illustrating a case where there is defocus with respect to a relatively large particle. Since the particle size is large as compared to the upper left part in FIG. 1, the reaction sectional area is large, and a reflected light amount is also large. Accordingly, it is possible to detect a difference in particle size as a difference in the reflected light amount (a difference in detection signal amount). A lower part of FIG. 1 is an experimental result illustrating a relationship between the detection signal amount at a focal position and the particle size.

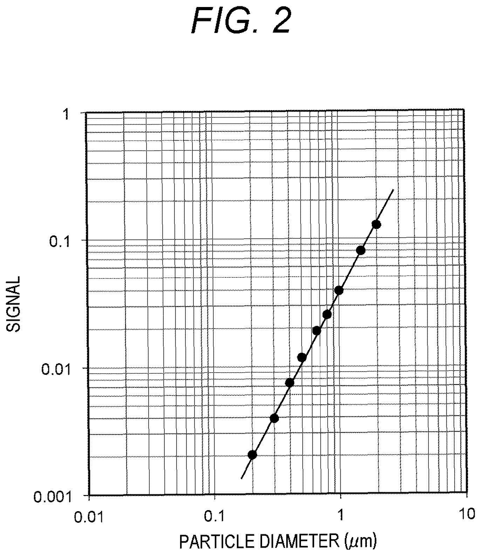

FIG. 2 is a simulation result illustrating a relationship between particle diameter and signal intensity. As a simulation method, a "wave ray tracing method" described in PTL 1 is used, a wavelength of a light source is 785 nm, and the numerical aperture of the objective lens is 0.45. As can be seen in the drawing, a magnitude of the detection signal changes depending on the size of the particle. These pieces of correspondence data are stored in advance, and thus, it is possible to measure the particle size from the magnitude of the detection signal. The detected reflected light changes in accordance with the particle size and a refractive index thereof. In the techniques described in PTL 1 and PTL 2, the detection signal can be obtained by converting an electric field amplitude of the reflected light into a voltage by using interference of light.

PTL 3 discloses a technique for appropriately correcting a change in an operation delay amount due to the influence of the temperature change or the temporal change by using an angle sensor that detects an angle of a laser beam deflected by a galvanometer mirror in a laser scanning microscope. The technique of PTL 3 is mainly intended to generate image information from fluorescence of an organic substance excited by the laser beam. Accordingly, the light serving as a source of the image information is fluorescence different from the wavelength of the light source. This light is wavelength-separated by a dichroic mirror or the like, and thus, even though an angle sensor that detects a deflection amount of the laser beam of the light source by a scanning mirror is added, there is no influence of stray light generated by addition of a reflection surface such as an optical path branching mirror or a sensor chip end surface.

In PTL 1 and PTL 2, it is considered that the influence of the temperature change or the temporal change is corrected by using the technique using the angle sensor described in PTL 3. However, as described above, since a signal to be converted into the image information in PTL 1 and PTL 2 is an extremely weak signal, when the optical system is changed as in PTL 3, it is considered that the influence of the stray light is not avoided. Therefore, the present invention provides a technique capable of suppressing the influence of the temperature change or the temporal change without using such a sensor.

Hereinafter, in the description of the present invention, a description will be given under a coordinate system where an optical axis direction is set as a Z axis, and an X axis and a Y axis are set in a plane orthogonal to the Z axis. In addition, unless otherwise specified, the light source is a semiconductor laser having a wavelength of 795 nm, the objective lens has a numerical aperture of 0.45, a range of the image information is 300 $\mu$m in both X and Y directions, the number of pixels is 400 pixels in both the X and Y directions, a sampling frequency of an A/D converter is 20 MHz, and an acquisition speed of the image information is 10 fps. In addition, in the following description, a scanning mirror in the X-axis direction is a resonance type galvanometer mirror having a high operation speed, and a scanning mirror in the Y-axis direction is a normal galvanometer mirror.

<First Embodiment: Light Measurement Method>

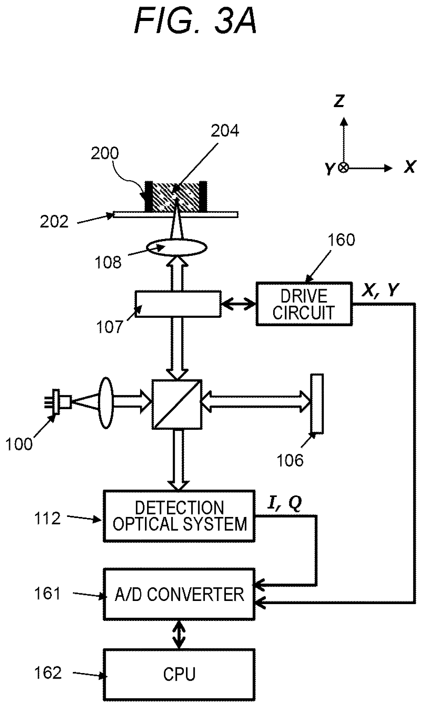

FIG. 3A is a schematic view illustrating a container to which a solvent containing a particle to be measured is input, an optical system, and a signal processing system. Here, a case is illustrated where a size and a density of a floating particle are measured by positioning a focal point of a laser beam positioned in the solvent. A laser beam extracted from a light source 100 is transmitted through a transparent flat plate 202 at a bottom of a container 200 by an objective lens 108, and is focused inside a sample 204. An operation of a scanning optical system 107 (scanning mirror) is controlled by a drive circuit 160. A laser beam reflected from the sample 204 interferes with a laser beam reflected by a reference light mirror 106, is converted into an electrical signal by a detection optical system 112, and becomes a detection signal. A time-series change of the detection signal is retained as a digital information string in an A/D converter 161. A central processing unit (CPU) 162 (arithmetic unit) generates image information from time-series data of detection signals stored in the A/D converter, and performs a process of measuring a size and a density of a particle in the sample 204. This measurement principle can be based on, for example, the techniques described in PTL 1 and PTL 2.

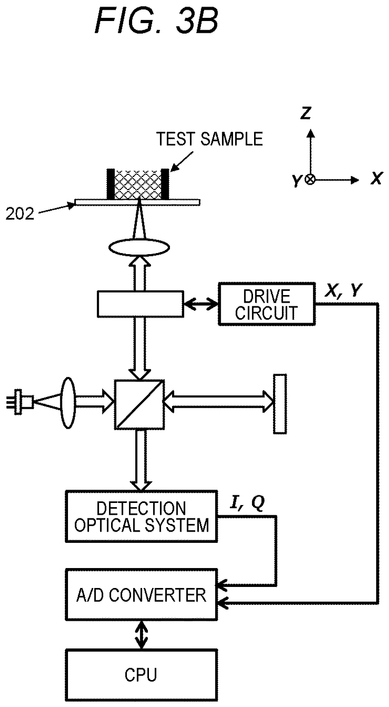

FIG. 3B illustrates a configuration in a case where a test sample in which a region mark is made of metal on a back surface of the transparent flat plate 202 instead of the sample 204 is observed. This can be used in an experiment for easily understanding a temperature influence of the scanning mirror.

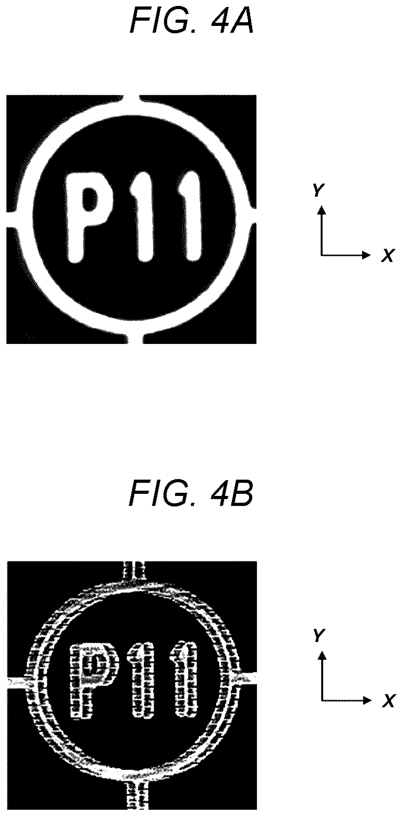

FIGS. 4A and 4B are enlarged views of image information of the region mark of the test sample. FIG. 4B illustrates the same image information in a case where a temperature of the scanning mirror changes by 1°C from FIG. 4A. When FIG. 4A and FIG. 4B are compared with each other, as is clear, an influence of a change in an operation delay amount of the scanning mirror due to the temperature change on the image information is extremely large.

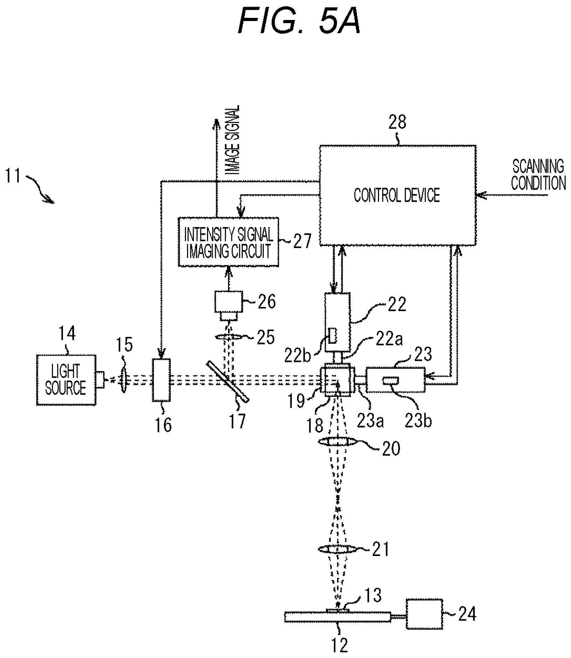

FIG. 5A is a transcription of FIG. 1 in PTL 3. In the drawing, scanning mirrors on the X axis and the Y axis are 22 and 23, and 22b and 23b are sensors that detect scanning angles of laser beams by the scanning mirrors. Signals of these sensors are acquired by a control device, and thus, it is possible to suppress distortion of the image information due to the temperature change or the temporal change of the scanning mirror.

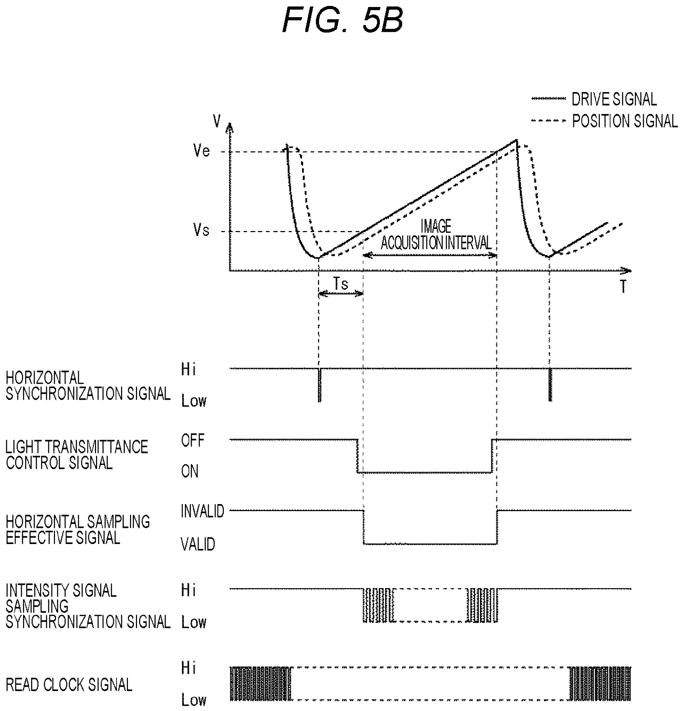

FIG. 5B is a transcription of FIG. 2 in PTL 3. The drawing illustrates a relationship between a drive signal and a position signal of the scanning mirror. A difference between the drive signal and the position signal in an image acquisition interval is the operation delay amount of the scanning mirror.

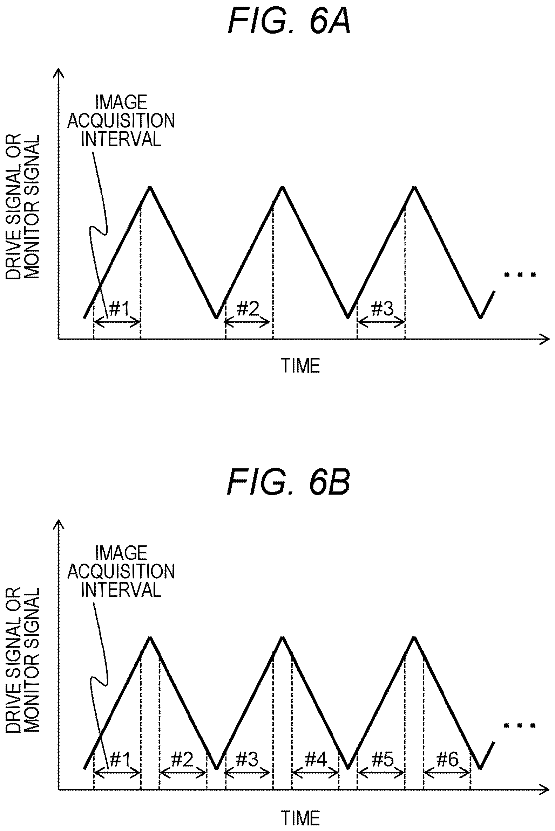

FIG. 6A is a diagram schematically illustrating a temporal change of a drive signal or a monitor signal of the scanning mirror. For ease of understanding, it is assumed here that the scanning mirror operates in a sawtooth wave shape. The monitor signal is a signal for electrically monitoring a position, a speed, or an acceleration of the scanning mirror by a circuit implemented inside the scanning mirror, and does not generate stray light due to an optical influence, but does not correctly represent a scanning angle or a position of a light spot, and is an electrical signal serving as an index of an electrically acquired state of the scanning mirror. In the drawing, in the image acquisition interval of PTL 3, the drive signal or the monitor signal is in an interval in which the drive signal or the monitor signal is upward to the right. At this time, the influence of the operation delay amount due to the temperature change or the temporal change of the scanning mirror is a shift in the X-axis or Y-axis direction of the generated image information. In a device such as a laser scanning microscope in which a position of an observation target projected with respect to the image information is important, it is important to suppress the shift of the image information.

FIG. 6B is a diagram schematically illustrating the temporal change of the drive signal or the monitor signal of the scanning mirror suitable in the present invention. In the techniques described in PTL 1 and PTL 2, in order to avoid an influence of Brownian motion of the particle floating in the sample, it is desirable to acquire image information at a double frame rate by providing the image acquisition interval not only in an interval in which the drive signal or the monitor signal is upward to the right but also in an interval in which the drive signal or the monitor signal is downward to the right as illustrated in the drawing. As experimental data illustrated in FIGS. 4A and 4B, image information is generated by using both a forward path and a backward path of the reciprocating scanning mirror as illustrated in FIG. 6B. Since the shift of the image information in a right direction on the paper and the shift of the image information in a left direction on the paper overlap for each pixel, this experimental data appears as a large distortion in FIG. 4B.

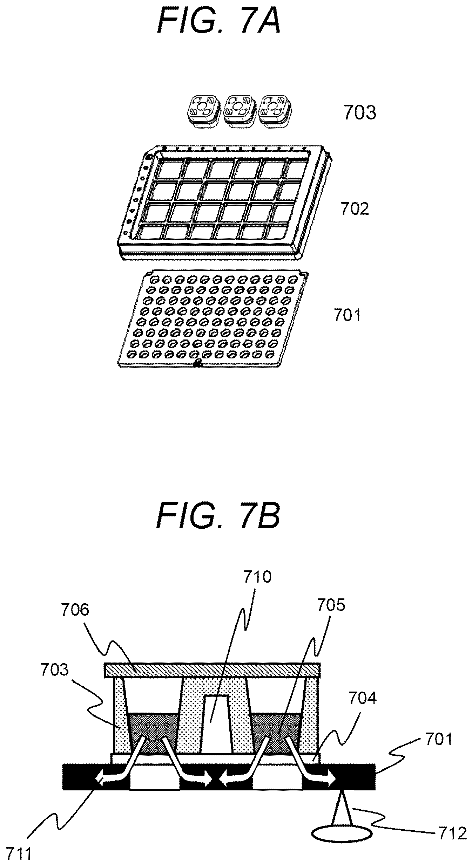

FIG. 7A is a diagram illustrating a detailed configuration of a sample container suitable in the present invention, and a frame and a base plate provided in the device. In the drawing, reference sign 701 denotes a base plate, reference sign 702 denotes a frame, and reference sign 703 denotes a sample container. The sample container 703 is positioned and set along the frame 702 on the base plate 701. At this time, a transparent plate (to be described later) formed on a bottom surface of the sample container 703 comes into contact with the base plate 701. It is desirable to use a metal material having a high thermal conductivity as a material of the base plate 701. Here, a graphite-based aluminum composite material having a high thermal conductivity and excellent processing accuracy was used. With such a structure, the sample container 703 can be disposable for each measurement, and the user's convenience can be improved while avoiding the influence of deposits on cleaning of the container and measurement. In the present embodiment, although a case where the sample container 703 is a set of 4 wells has been described in consideration of handleability of the user, a container or the like in which 32 wells are used as a set can also be created, and the number of sets can be appropriately selected in consideration of cost, yield, and the like of the container.

FIG. 7B is a schematic view illustrating a relationship between the sample container 703 and the base plate 701. In the drawing, reference sign 701 denotes a base plate, reference sign 703 denotes a sample container, reference sign 704 denotes a transparent plate, reference sign 705 denotes a sample, reference sign 706 denotes a seal for suppressing evaporation of the sample, reference sign 710 denotes a void for improving shape accuracy of the container by injection molding, and reference sign 711 denotes a heat flow from the sample to the base plate.

With this structure, the transparent plate 704 formed on the container bottom surface can come into direct contact with the base plate 701. A pit corresponding to the transparent plate 704 is provided in the base plate 701, and a diameter thereof is larger than a diameter of the well containing the sample. In the present invention, when there is a difference between a temperature of the sample and a temperature of a measurement device, a flow of the particle due to convection occurs, and measurement accuracy decreases. In the present embodiment, a glass material having a high thermal conductivity with respect to a plastic material is used as the transparent plate 704, and the transparent plate and the base plate 701 made of metal and having a high thermal conductivity are brought into contact with each other. As a result, the temperature of the sample can be set to the same as the temperature in the device in a short time, and a waiting time for temperature stabilization can be shortened to improve the convenience of the user. The waiting time for temperature stabilization experimentally ascertained by the inventors was about 10 minutes. In addition, in the present embodiment, measurement of 96 samples can be continuously performed by one operation. A time required to complete the measurement of 96 samples under a condition in which the above standard measurement was repeated 10 times for each sample was about 4.8 hours.

In the present invention, when the operation delay amount of the scanning mirror is measured, a laser beam 712 is focused on a back surface of the base plate 701 (a surface on a side that does not come into contact with the sample container 703), and a cutting trace obtained by machining is used as image information.

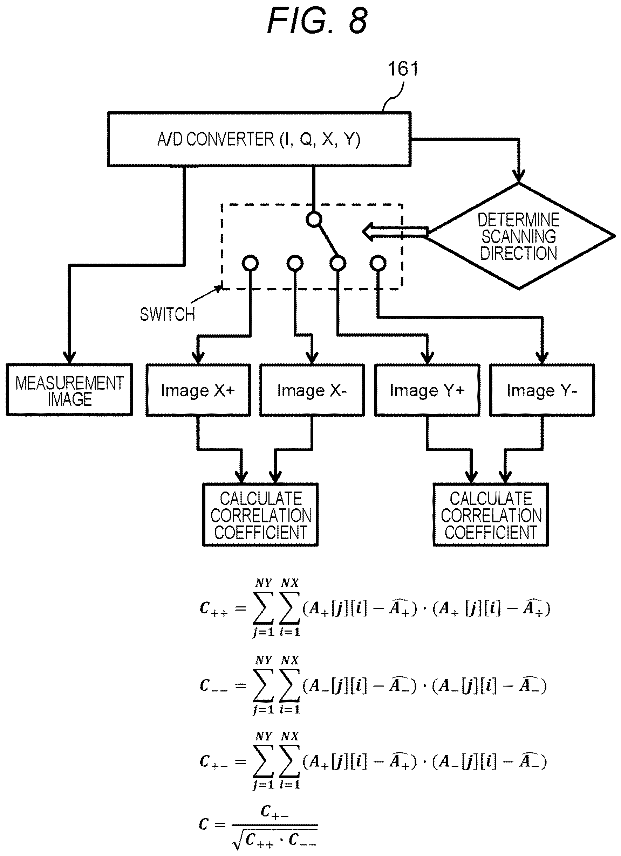

FIG. 8 is a schematic view illustrating a configuration of a processing system that generates image information from a detection signal in the present embodiment. This processing system can be performed by the CPU 162. Here, it is assumed that the temporal change of the detection signal is retained as time series data in an internal memory of the A/D converter 161. The time-series data describes a detection signal I, a detection signal Q having a phase different from that of detection signals I by 90 degrees, a drive signal or a monitor signal X of the X-axis scanning mirror, and a drive signal or a monitor signal Y of the Y-axis scanning mirror. Normally, image information for measurement is generated by using all pieces of time-series data of the detection signal. At the time of updating the operation delay amount of the scanning mirror, as illustrated in the drawing, the scanning speed is determined, and two sets of pieces of image information including ImageX+, ImageX-, ImageY+, and ImageY- are generated in a case where the speed is positive and a case where the speed is negative. ImageX+ and ImageY+ are generated from the right upward interval illustrated in FIG. 6B, and ImageX- and ImageY- are generated from the right downward interval. In the case of a set of ImageX+ and ImageX-, the influence of the operation delay amount of the scanning mirror on the drive signal appears as a shift of pixel positions having the same magnitude and opposite orientations between ImageX+ and ImageX-. Due to the use of this shift, a condition in which ImageX+ and ImageX- best coincide with each other is determined while a correction amount of the operation delay amount is changed. For example, an optimum value of the correction amount of the operation delay amount of the scanning mirror is determined as a condition in which a correlation coefficient between ImageX+ and ImageX- is maximized. For the Y-axis direction, the same is performed for ImageY+ and ImageY-.

[Math. 1]

When the pieces of image information ImageX+ and ImageX- to be generated are $A_+[j][i]$ and $A_-[j][i]$, respectively, pixel indexes represented by i = 1, 2, ..., and NX, j = 1, 2, ..., and NY are used, $\widehat{A_+}$ is an average value of $A_+$, and $\widehat{A_-}$ is an average value of $A_-$, a correlation coefficient is represented by the following Expression 1.

$$C = \frac{C_{+-}}{\sqrt{C_{++} \cdot C_{--}}} \qquad (\text{Expression 1})$$

Terms in Expression 1 are defined as follows.

$$C_{++} = \sum_{j=1}^{NY} \sum_{i=1}^{NX} (A_+[j][i] - \widehat{A_+}) \cdot (A_+[j][i] - \widehat{A_+})$$

$$C_{--} = \sum_{j=1}^{NY} \sum_{i=1}^{NX} (A_-[j][i] - \widehat{A_-}) \cdot (A_-[j][i] - \widehat{A_-})$$

$$C_{+-} = \sum_{j=1}^{NY} \sum_{i=1}^{NX} (A_+[j][i] - \widehat{A_+}) \cdot (A_-[j][i] - \widehat{A_-})$$

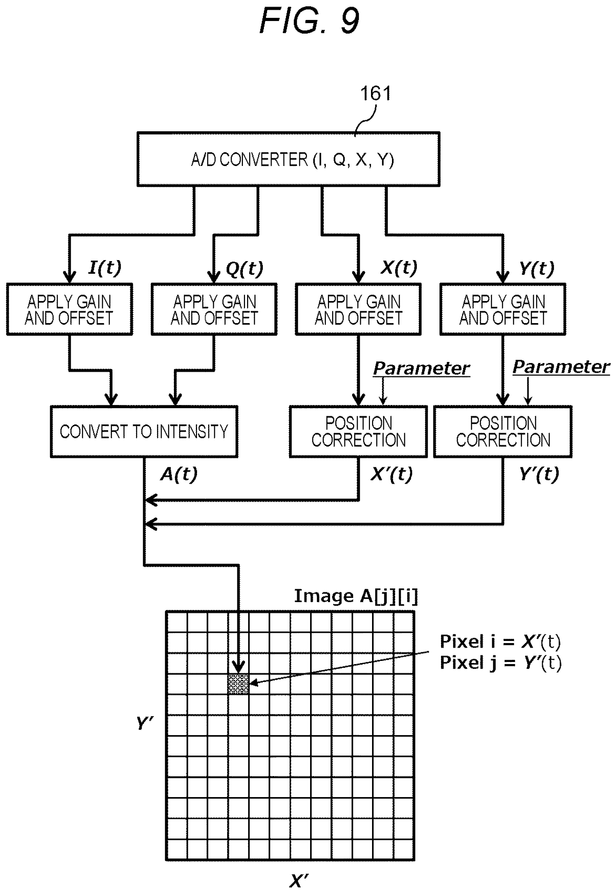

FIG. 9 is a schematic view illustrating data conversion of the processing system that generates the image information from the detection signal. The pieces of time-series data of the detection signal retained by the A/D converter 161 are expressed as I(t), Q(t), X(t), and Y(t) as functions of time t. In order to convert I(t) and Q(t) into intensity data included in the image information, predetermined gain correction and offset correction are performed on I(t) and Q(t) as necessary, and I(t) and Q(t) are converted into intensity data A(t). In the present invention using a homodyne detection optical system, A(t) is represented by the following Expression 2: $A(t) = I(t)^2 + Q(t)^2 \cdots$ (Expression 2).

A drive signal or a monitor signal X(t) of the scanning mirror in the X-axis direction is converted into a pixel index X'(t) of the image information at the X-axis based on a correction parameter of the operation delay. Similarly, a drive signal or a monitor signal Y(t) of the scanning mirror in the Y-axis direction is converted into a pixel index Y'(t) of the image information at the X-axis based on the correction parameter of the operation delay. Due to the use of these pixel indexes, a predetermined process such as averaging is performed on the intensity data A(t) at time t as the intensity data of the pixel described by pixel positions i = X'(t) and j = Y'(t). Through these processes, the time-series data of the detection signal is converted into the image information. These processes are common to all pieces of data used for normal measurement and to ImageX+, ImageX-, ImageY+, and ImageY- for determining the correction amount of the operation delay of the scanning mirror of the present invention.

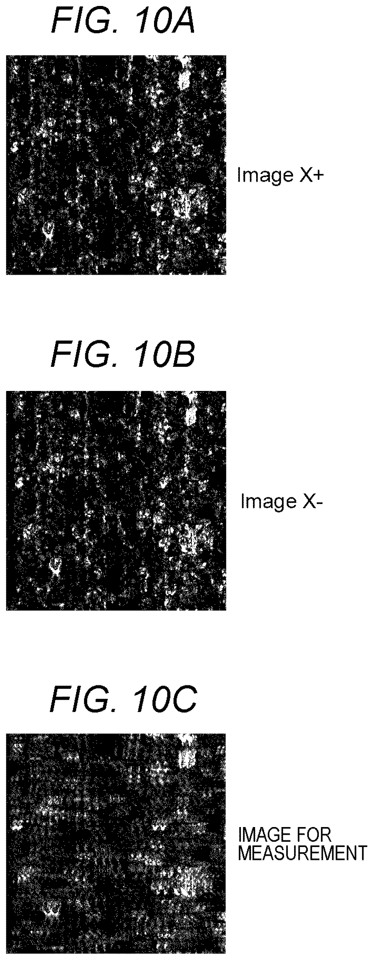

FIGS. 10A, 10B, and 10C are XY image information of the base plate 701 obtained based on the processing system of the present embodiment. FIG. 10A illustrates ImageX+, FIG. 10B illustrates ImageX-, and FIG. 10C illustrates image information for measurement. Compared with FIGS. 10A and 10B, FIG. 10C seems to be blurred because the correction amount of the operation delay of the X-axis scanning mirror is smaller than the optimum value. Compared in detail with FIGS. 10A and 10B, in FIG. 10C, it can be seen that FIGS. 10A and 10B are shifted in the X direction (horizontal direction on the paper).

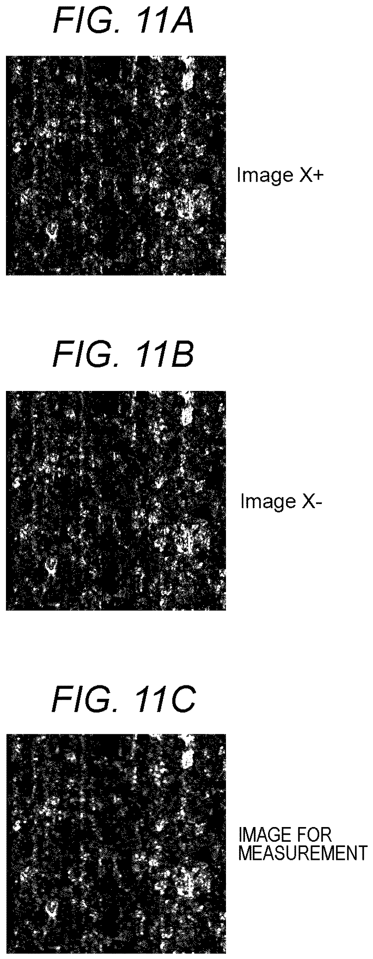

FIGS. 11A, 11B, and 11C are XY image information of the base plate 701 obtained based on the processing system of the present embodiment. FIG. 11A illustrates ImageX+, FIG. 11B illustrates ImageX-, and FIG. 11C illustrates image information for measurement. Compared with FIGS. 11A and 11B, FIG. 11C seems to be equally sharp because the correction amount of the operation delay of the X-axis scanning mirror is set to the optimum value.

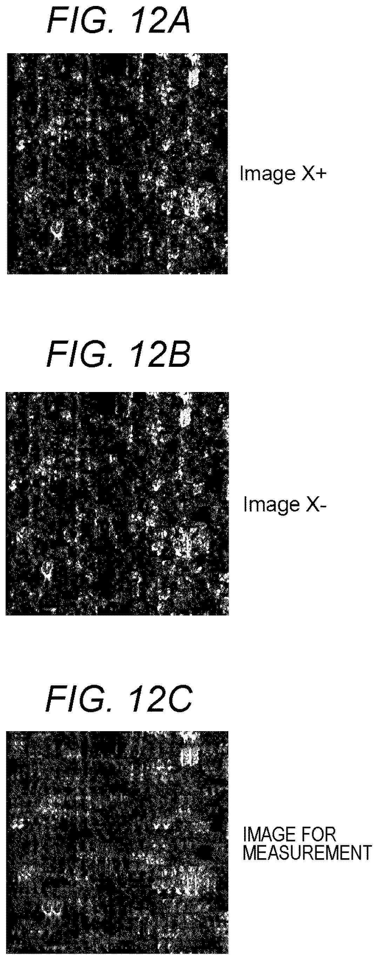

FIGS. 12A, 12B, and 12C are XY image information of the base plate 701 obtained based on the processing system of the present embodiment. FIG. 12A illustrates ImageX+, FIG. 12B illustrates ImageX-, and FIG. 12C illustrates image information for measurement. Compared with FIGS. 12A and 12B, FIG. 12C seems to be blurred because the correction amount of the operation delay of the X-axis scanning mirror is larger than the optimum value. When detailed comparison is made, in FIG. 12C, it can be seen that FIGS. 12A and 12B are shifted in the X direction (horizontal direction in the drawing), and a shift direction is an opposite orientation in FIGS. 10A and 10B.

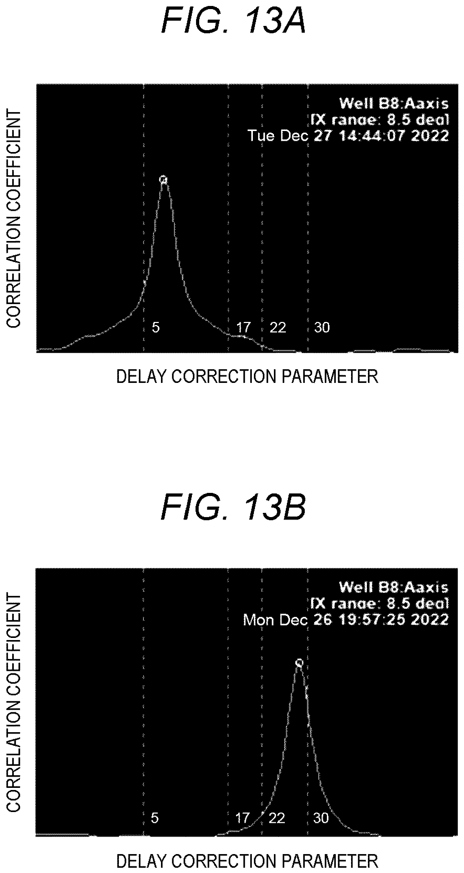

FIG. 13A is an experimental result illustrating a relationship between the correction amount of the operation delay of the scanning mirror in the X-axis direction and the correlation coefficient between ImageX+ and ImageX-. A condition in which the correlation coefficient illustrated in the drawing is maximized is the optimum correction amount of the operation delay. FIG. 13A is obtained in a case where the internal temperature of the device is 7°C.

FIG. 13B is another experimental result illustrating a relationship between the correction amount of the operation delay of the scanning mirror in the X-axis direction and the correlation coefficient between ImageX+ and ImageX-. FIG. 13B is obtained in a case where the internal temperature of the device is 28°C. Similarly, the condition in which the correlation coefficient is maximized is the optimum correction amount of the operation delay. As is clear by comparison with FIG. 13A, it is indicated that due to the internal temperature of the device, a value of the optimum correction amount differs from that of 7°C. In a case where the optimum correction amount of the operation delay is used at 7°C, it can be seen that the correlation coefficient between ImageX+ and ImageX- decreases to almost zero. Accordingly, according to the present embodiment, the correction amount of the operation delay is updated before the size and density of the particle floating in the sample are measured, and thus, it is possible to perform accurate measurement while preventing the distortion of the image information.

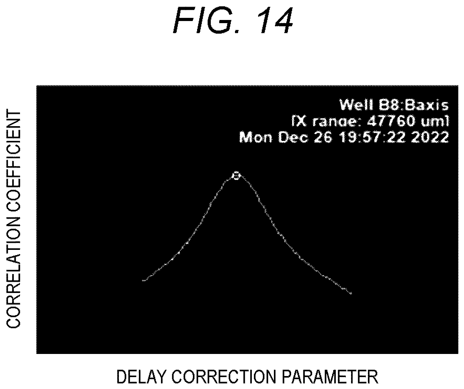

FIG. 14 is an experimental result illustrating a relationship between the correction amount of the operation delay of the scanning mirror in the Y-axis direction and the correlation coefficient between ImageY+ and ImageY-. Similarly to the X-axis direction, the condition in which the correlation coefficient is maximized is the optimum correction amount of the operation delay. FIG. 14 is obtained in a case where the internal temperature of the device is 28°C.

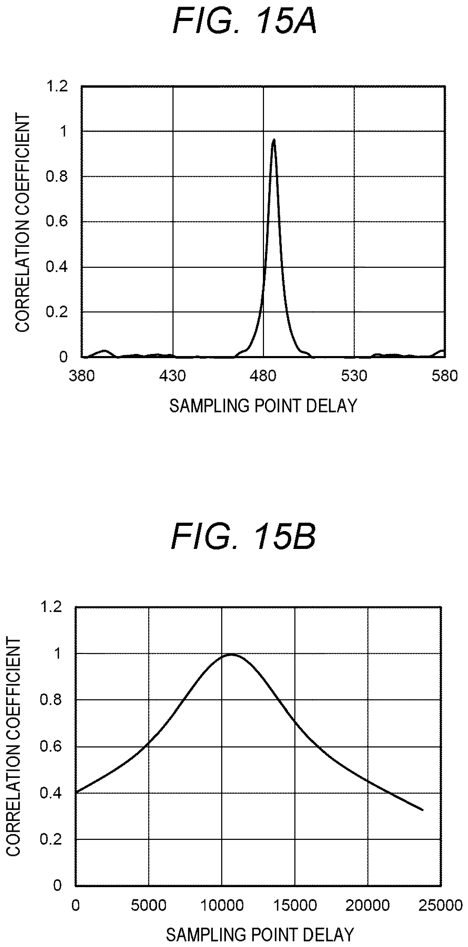

FIG. 15A is an experimental result illustrating a relationship between the correction amount of the operation delay of the scanning mirror in the X-axis direction and the correlation coefficient between ImageX+ and ImageX-. Here, a result in a case where a detection range of the correlation coefficient is limited to $200 \times 200$ pixels in a central portion with respect to NX = NY = 400 pixels for the purpose of shortening a processing time is illustrated. One period corresponds to 5000 sampling points. A horizontal axis (sampling point delay) is an index number representing a shift amount of a pixel reference point in the time-series data of the detection signal sampled and accumulated at 20 MHz. A correlation coefficient of 0.9 or more is obtained at the maximum, and an operation delay amount can be preferably corrected even under a condition in which the processing time is shortened by reducing the detection range of the correlation coefficient.

FIG. 15B is an experimental result illustrating a relationship between the correction amount of the operation delay of the scanning mirror in the Y-axis direction and the correlation coefficient between ImageY+ and ImageY-. Similarly to FIG. 15A, a result in a case where the detection range of the correlation coefficient is limited to $200 \times 200$ pixels in the central portion for NX = NY = 400 pixels for the purpose of shortening the processing time is illustrated. One period corresponds to 4 million sampling points. The reason why a half-value width of the correlation coefficient is wider and a margin is larger than that of the X-axis illustrated in FIG. 15A is that an operation speed of the scanning mirror in the Y-axis direction is 1/400 indicating the number of pixels as compared with the scanning mirror in the X-axis direction.

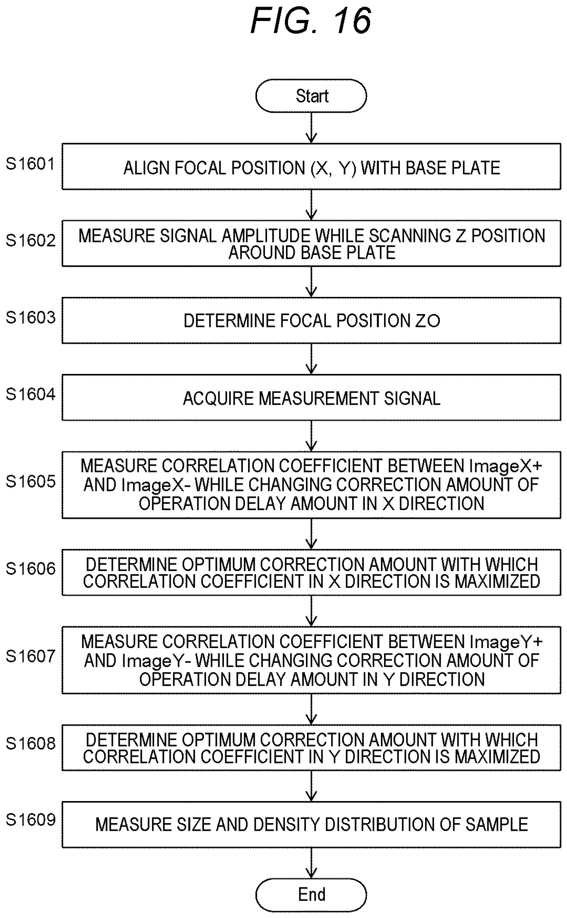

FIG. 16 is a flowchart illustrating a flow of measurement according to the present embodiment. In step S1601, a focal position is moved in a XY-axis direction to be aligned with the base plate 701. In steps S1602 and 1603, the magnitude of the detection signal is measured while a sample folder including the base plate is moved in the Z-axis direction, and a focal position Z0 at which the magnitude of the detection signal is maximized is determined. In step S1604, time-series data of a measurement signal is acquired. In S1605 and S1606, ImageX+ and ImageX- are generated while the correction amount of the operation delay amount of the scanning mirror in the X-axis direction is changed, and the condition in which the correlation coefficient between ImageX+ and ImageX- is maximized is determined as the optimum correction amount in the X-axis direction. In S1607 and S1608, ImageY+ and ImageY- are generated while the correction amount of the operation delay amount of the scanning mirror in the Y-axis direction is changed, and a condition in which the correlation coefficient between ImageY+ and Image Y- is maximized is determined as the optimum correction amount in the Y-axis direction. The size and density of the particle floating in the sample are measured in step S1609 by using the correction amount of the operation delay of the scanning mirrors in the X-axis direction and the Y-axis direction updated as described above.

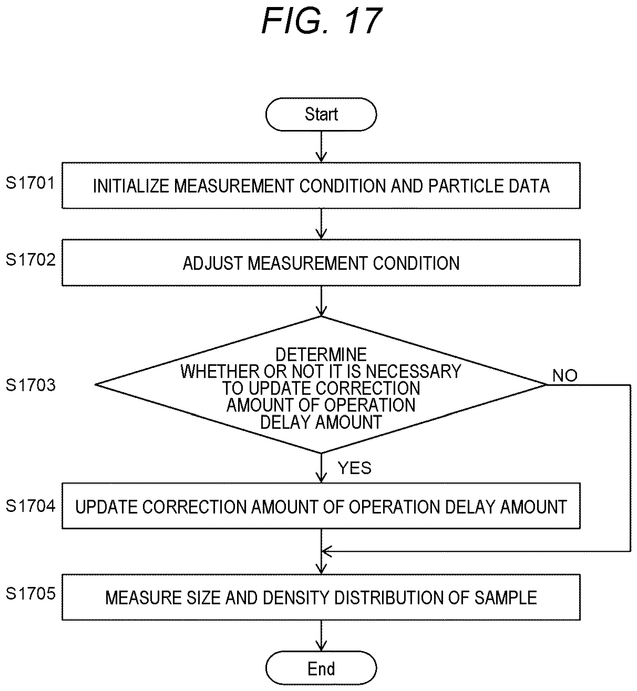

FIG. 17 is another flowchart illustrating a flow of measurement according to the present embodiment. Since a factor of the update of the correction amount of the operation delay of the scanning mirror according to the present embodiment is mainly the temperature change, the update of the correction amount of the operation delay of the scanning mirror may not be necessarily performed for all the samples before the measurement. This flowchart is a modification example of FIG. 16 in this viewpoint.

In step S1701, measurement conditions related to measurement of one sample are initialized. In step S1702, measurement conditions of an optical system and an electrical system including an optical path length of the reference light mirror are adjusted. In step S1703, it is determined whether or not it is necessary to update the operation delay amount of the scanning mirror, and only in a case where it is determined to be necessary, a process of updating the correction amount of the operation delay amount of the scanning mirror is performed in step S1704. The update process is similar to that in FIG. 16. The determination of whether or not it is necessary to perform the update process can be performed as follows, for example: (a) it is necessary in the initial measurement after the device is started, (b) it is necessary in the initial measurement of the continuous measurement of a series of samples, (c) it is necessary when a certain time or more has elapsed since the last update, (d) it is necessary when a current device temperature changes from a device temperature at the time of the last update by a certain time or more, and (e) others are unnecessary. In a case where it is determined that the update process is unnecessary, the retained latest correction amount is used as it is. In step S1705, the size and density of the particle floating in the sample are measured.

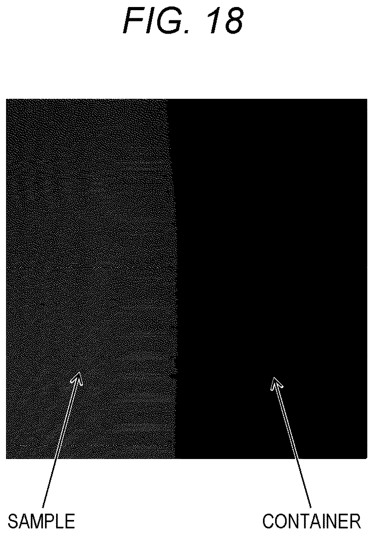

FIG. 18 illustrates image information obtained in a case where the correction amount of the operation delay of the scanning mirror is updated in an edge portion of the sample container. The image information used for updating the correction amount of the operation delay amount of the scanning mirror by the light measurement method of the present embodiment is not limited to the time-series data of the detection signal acquired on the back surface of the base plate. It is also possible to use time-series data of the detection signal acquired at another position. In the drawing, a left side is a region containing the sample, and a right side is a wall surface of the sample container. When the image information acquired is not uniform in a plane as shown, time-series data of the detection signal acquired at any position within a position range observable by the device can be used.

<First Embodiment: Conclusion>

The light measurement method according to the present embodiment sets the focal position of the laser beam on the base plate 701 (or the edge portion of the sample container), divides the time-series data of the detection signal into a case where the scanning speed of the light spot is positive and the case where the scanning speed of the light spot is negative while the light spot is scanned in a XY direction, and generates a set of pieces of image information from each detection signal stream. The image information in the case where the scanning speed is positive and the image information in the case where the scanning speed is negative are compared with each other to search for a condition in which the image information and the image information coincide with each other the most, and the correction amount of the operation delay of the scanning mirror in each of the XY direction is determined based on the condition. As a result, it is possible to realize stable measurement that is not influenced by the temperature change or the temporal change without disposing an additional device such as an angle sensor.

<Second Embodiment: Light Measurement Device>

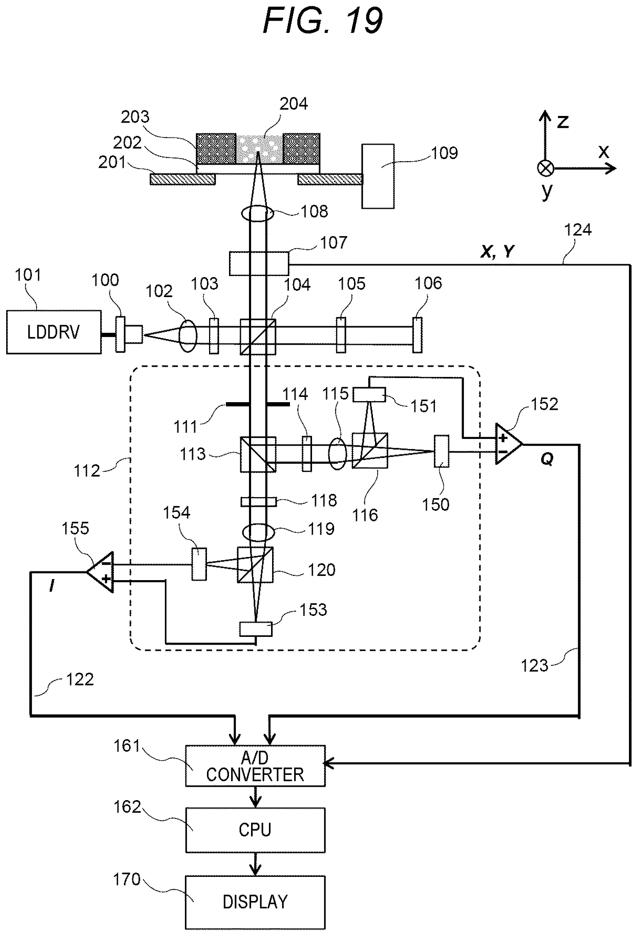

FIG. 19 is a schematic view illustrating a configuration of a light measurement device that measures a particle size distribution according to the present invention. The laser beam emitted from the light source 100, whose light emission state is controlled by a laser driver 101 that controls radio frequency superimposition and extraction power, is converted into parallel light by a collimator lens 102. A polarization azimuth of the laser beam is adjusted by a $\lambda/2$ plate 103 whose optical axis is set to about 22.5 degrees with respect to a horizontal direction. And then the laser beam is separated into signal light and reference light by a polarization beam splitter 104.

The reference light is converted into a circularly polarized state by a $\lambda/4$ plate 105, is then reflected by the reference light mirror 106, is in a polarized state in which the polarization in the forward path is rotated by 90 degrees by the $\lambda/4$ plate 105, and is reflected by the polarization beam splitter 104. After a traveling direction of the signal light is deflected by a scanning optical system 107 (composite deflecting mirror in X and Y directions), the signal light is converted into a circularly polarized state by an action of a built-in $\lambda/4$ plate, and is focused in the sample 204 by the objective lens 108. The sample 204, the sample container 203 containing the sample and having the transparent flat plate 202 formed on the bottom surface, and the base plate 201 are positioned in the Z-axis direction by a drive mechanism 109 moving in the Z-axis direction. As a result, a focal position of the signal light is scanned along the Z-axis direction. A component of the signal light reflected from the particle floating in the sample 204 is deflected in the same direction as the forward path by the scanning optical system 107, and becomes a polarized state rotated by 90 degrees in the forward path by the action of the built-in $\lambda/4$ plate, and is transmitted through the polarization beam splitter 104. Here, the sample container 203 retains the sample 204 and guides the signal light into the sample via the transparent flat plate 202. The base plate 201 come into contact with the transparent flat plate 202 to mechanically hold the sample container 203 and to stabilize the temperature of the sample.

The signal light and the reference light are multiplexed by the polarization beam splitter 104, are guided to the detection optical system 112, and split into transmitted light and reflected light by a half beam splitter 113 via a pinhole 111.

The reflected light passes through a λ/4 plate 114 whose optical axis is set to about 45 degrees with respect to the horizontal direction, is condensed by a condensing lens 115, and is branched into two by the polarization beam splitter 116. The branched light rays are photoelectrically converted by photodetectors 150 and 151, are differentially amplified by a current differential amplifier 152, and become a detection signal Q123.

The transmitted light passes through a λ/2 plate 118 whose optical axis is set to about 22.5 degrees with respect to the horizontal direction, is condensed by a condensing lens 119, and is branched into two by a polarization beam splitter 120. The branched light rays are photoelectrically converted by photodetectors 153 and 154, are differentially amplified by a current differential amplifier 155, and become a detection signal I122.

The detection optical system 112 illustrated here constitutes a homodyne phase diversity method, and the detection signals 122 and 123 are a real number part and an imaginary number part of a complex electric field obtained by amplifying reflected light from a target particle by reference light.

The A/D converter 161 acquires and stores, as the time-series data, the detection signal I122, the detection signal Q122, and drive signals or the monitor signals X and Y124 of the X-axis scanning mirror and the Y-axis scanning mirror built in the scanning optical system 107. Intensity signal S necessary for the particle size measurement is calculated from the detection signal I122 and the detection signal Q122 by (Expression 2). The control signals or the monitor signals X and Y of the X-axis scanning mirror are converted into pixel position signals X' and Y' based on the latest correction amount of the operation delay of the scanning mirror. The image information necessary for the measurement is generated from the time-series data of the intensity signal S and the pixel position signals X' and Y'. The signal processing unit 124 generates the image information for measurement, controls operation of components of the device including the light source, determines the correction amount of the operation delay amount for at least one of the scanning mirror in the X-axis direction and the scanning mirror in the Y-axis direction through the processing system illustrated in FIGS. 8 and 9, and performs the update process of the correction amount based on the flow of FIGS. 16 and 17. A display unit 170 displays a calculation result by the signal processing unit 124 and presents the calculation result to the user.

Performing continuous automatic measurement on an array of a plurality of sample containers illustrated in FIG. 7A by using the present device can be easily realized by adding a sample moving function not only in the Z direction but also in the XY direction as a function of the drive mechanism 109.

<Third Embodiment>

In a third embodiment of the present invention, a detailed operation or a modification example of each unit when the correction amount is determined will be described. Other matters such as a configuration and an operation procedure of the light measurement device are the same as those in the above embodiments.

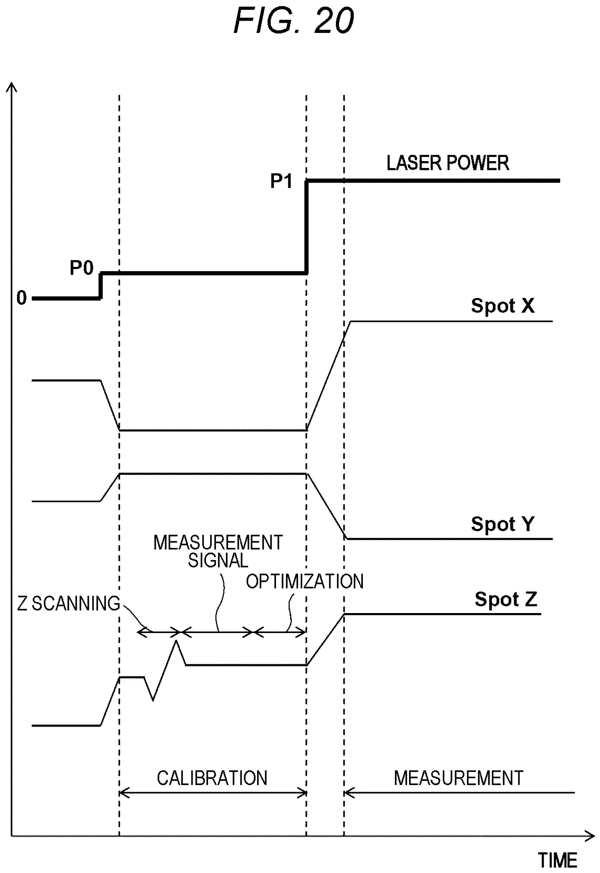

FIG. 20 is a schematic view illustrating temporal changes of a power of the laser beam and a position of the light spot according to the flow of FIG. 16. In the drawing, a measurement interval follows a calibration interval of the delay amount of the scanning mirror. Regarding the position of the light spot, after the light spot is moved from an initial value to a predetermined (X, Y) position, scanning is performed in the Z direction to determine the focal position, measurement of a signal is performed at the focal position, and the process of updating the delay correction amount is performed. Regarding the power of the laser beam, the process of updating the delay correction amount is performed with power P0 suitable for measuring a performance signal from the predetermined base plate. In the measurement of the size and density of the particle floating in the sample, the measurement process is performed with another predetermined power P1. Since the magnitude of the reflected light obtained from the base plate is larger than the magnitude of the reflected light from the particle floating in the sample, $P0 \leq P1$ is set, and thus, a dynamic range and an SNR of the A/D converter and a circuit system can be effectively used.

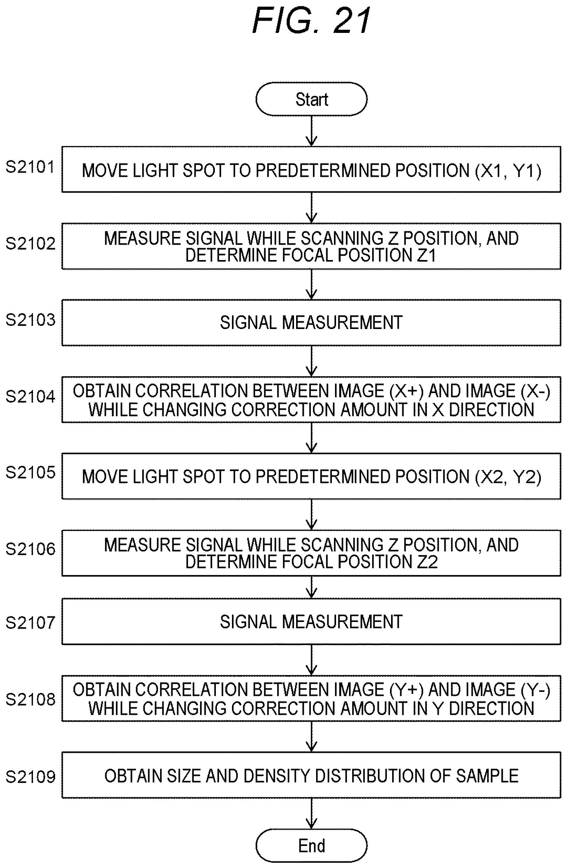

FIG. 21 is a flowchart for explaining a procedure for determining the correction amount by using the sample of FIG. 18. The edge portion of the sample container illustrated in FIG. 18 is preferably used to update the delay correction amount of the scanning mirror in the X direction because a luminance of the image information is different in a left-right direction. On the other hand, in order to update the delay amount of the scanning mirror in the Y direction, it is preferable to perform the update process at the (X, Y) position where the luminance of the image information is different in an up-down direction. Therefore, FIG. 21 illustrates a flow of processes in a case where the process of updating the delay amount is performed by using image information suitable for each position.

In step S2101, the light spot position is moved to a position (X1, Y1) suitable for updating the delay correction amount in the X-axis direction. In step S2102, the detection signal is acquired while the light spot is moved in the Z-axis direction, and the position of the light spot is determined at a focal position Z1 as a condition in which the size of the detection signal is maximized. In step S2103, time-series data of a measurement signal is acquired. In S2104, ImageX+ and ImageX- are generated while the correction amount of the operation delay amount of the scanning mirror in the X-axis direction is changed, and the condition in which the correlation coefficient between ImageX+ and ImageX- is maximized is determined as the optimum correction amount in the X-axis direction. In step S2105, the light spot position is moved to a position (X2, Y2) suitable for updating the delay correction amount in the Y-axis direction. In step S2106, the detection signal is acquired while the light spot is moved in the Z-axis direction, and the position of the light spot is determined at a focal position Z2 as a condition in which the size of the detection signal is maximized. In step S2107, time-series data of a measurement signal is acquired. In S2108, ImageY+ and Image Y- are generated while the correction amount of the operation delay amount of the scanning mirror in the Y-axis direction is changed, and the condition in which the correlation coefficient between the two is maximized is determined as the optimum correction amount in the Y-axis direction. The correction amounts of the operation delays of the scanning mirrors in the X-axis direction and the Y-axis direction updated as described above are used, and thus, the size and density distribution of the particle floating in the sample are measured in step S2109.

<About Modification Examples of Present Invention>

The present invention is not limited to the aforementioned embodiments, and includes various modification examples. For example, the aforementioned embodiments are described in detail in order to facilitate easy understanding of the present invention, and are not limited to necessarily include all the described components. In addition, some of the components of a certain embodiment can be substituted into the components of another embodiment, and the components of another embodiment can be added to the component of a certain embodiment. In addition, other components can be added, removed, and substituted to, from, and into some of the components of the aforementioned embodiments.

In the above embodiments, although a case where the present invention is applied to the method for measuring the particle size and density described in PTL 1 and PTL 2 has been described, a method for determining and updating the correction amount of the operation delay of the scanning mirror described herein can also be applied to a laser scanning microscope described in PTL 3. In the technique described in PTL 3, it has been described that the correction amount of the operation delay of the scanning mirror is determined by the angle sensor that detects the scanning angle of the laser beam by the scanning mirror, it is not possible to correct the influence of the shape deformation or the voltage drift due to a temperature change or a temporal change of power supply voltage fluctuation of a lens barrel that holds the angle sensor or a circuit that drives the sensor. On the other hand, since the technique disclosed in the present invention directly optimizes image information that is a final purpose of measurement, it is possible to generate stable image information without being influenced by the change and drift described above. At that time, for example, when image information of an optically substantially uniform target such as a front surface of a silicon substrate is used, the image information generated by division hardly changes with respect to the pixel shift, and thus, it is not possible to accurately determine the correction amount of the operation delay of the scanning mirror. In such a case, it is desirable to determine the correction amount at a position where the image information is not uniform in the plane, such as an edge portion of a prepared specimen.

Although the above embodiments describe the method of simultaneously determining and updating the correction amounts of the operation delays for both the scanning mirrors in the X-axis direction and the Y-axis direction, the technique of the present invention can also be applied to only one of the X-axis and the Y-axis. In that case, the obtainment of an effect of shortening the processing time can be obtained additionally noted.

In the above embodiments, for example, in order to determine the optimum correction amount of the operation delay of the scanning mirror in the X-axis direction, the condition in which the correlation coefficient between ImageX+ and ImageX- is maximized has been used. This means that a condition in which a degree of coincidence between ImageX+ and ImageX-is obtained. Accordingly, in addition to the maximum condition of the correlation coefficient, a minimum condition of an RMS error between ImageX+ and ImageX-, a minimum condition of a sum of absolute values of differences, and the like can be similarly used for determining the optimum correction amount of the operation delay. Even though an index other than the correlation coefficient is used, it is mathematically guaranteed that the same result can be obtained within a calculation error range of the CPU. For example, it is possible to appropriately select the index and the condition for obtaining the optimum correction amount based on the present invention according to the purpose of simplification of processing, shortening a development period of the device, or the like, such as shortening the processing time or reusing an existing FPGA.

In the above embodiments, the objective lens 108 and the drive mechanism 109 have a role as an irradiation unit that condenses the signal light with respect to the sample and irradiates the sample with the signal light, and the detection optical system 112 has a role as a detection unit that detects an interference signal generated by interference between the signal light and interference light.

Reference Signs List

100    light source
108    objective lens

109    drive mechanism
112    detection optical system
161    A/D converter
162    CPU (arithmetic unit)
201    base plate
202    transparent flat plate
203    sample container

**Claims**

1. A light measurement device that measures a sample by irradiating the sample with light, the device comprising:

   an irradiation unit that irradiates a sample with a laser beam;
   a mechanism that scans, by using a scanning mirror, a light spot of the laser beam in a plane orthogonal to an optical axis of the laser beam by causing the light spot to reciprocate in a first orientation and a second orientation opposite to the first orientation;
   a detector that detects, as a detection signal, a light amount optically obtained by the scanning; and
   an arithmetic unit that processes the detection signal,
   wherein the arithmetic unit generates first image information of the sample from the detection signal when the light spot is moved in the first orientation,
   wherein the arithmetic unit generates second image information of the sample from the detection signal when the light spot is moved in the second orientation, and
   wherein the arithmetic unit determines a correction amount for correcting an operation delay of the scanning mirror based on the first image information and the second image information.

2. The light measurement device according to claim 1, wherein the arithmetic unit determines, as the correction amount, a correction value with which a delay amount between a drive signal of the scanning mirror and a position signal of the light spot is optimally corrected.

3. The light measurement device according to claim 2, wherein the arithmetic unit determines the correction amount by searching for the correction value with which a degree of coincidence between the first image information and the second image information is maximized while changing a candidate value for the correction value.

4. The light measurement device according to claim 1,

   wherein the mechanism scans the light spot along a first in-plane direction in the plane,
   wherein the arithmetic unit generates the first image information and the second image information obtained by scanning the light spot in the first in-plane direction, and
   wherein the arithmetic unit determines the correction amount for correcting an operation delay of the scanning mirror in the first in-plane direction.

5. The light measurement device according to claim 4,

   wherein the arithmetic unit performs

      scanning the light spot in a third direction and a fourth direction opposite to the third direction in a second in-plane direction orthogonal to the first in-plane direction in the plane,
      generating third image information of the sample from the detection signal when the light spot is moved in the third direction, and
      generating fourth image information of the sample from the detection signal when the light spot is moved in the fourth direction, and

   wherein the arithmetic unit determines the correction amount for correcting an operation delay of the scanning mirror in the second in-plane direction in addition to the correction amount in the first in-plane direction.

6. The light measurement device according to claim 1, wherein, when the correction amount is determined, the irradiation unit sets a focal point of the light spot at a position where an image in the plane orthogonal to the optical axis is not uniform.

7. The light measurement device according to claim 1, wherein, when the correction amount is determined, the irradiation unit sets a focal point of the light spot on a surface on a side not in contact with the container, among two surfaces of a base plate disposed on a bottom surface of the container storing the sample.

8. The light measurement device according to claim 1, wherein the arithmetic unit determines the correction amount in at least one of:

   a case where initial measurement after the light measurement device is started is performed,
   a case where initial measurement in a case where a plurality of the samples are continuously measured is performed,
   after a predetermined time or more has elapsed from when the correction amount was last updated, or
   when a temperature of the light measurement device changes by a threshold or more from when the correction amount was last updated.

9. The light measurement device according to claim 1,

   wherein the sample is a liquid sample containing a particle,
   wherein the light measurement device further includes a branching unit that branches the laser beam into signal light and reference light,
   wherein the irradiation unit condenses the signal light on the sample and irradiates the sample with the signal light,
   wherein the light measurement device further includes an interference optical system that obtains an interference signal by causing the signal light reflected from the particle and the reference light to interfere with each other, and
   wherein the arithmetic unit generates image information of the sample from the interference signal and measures at least one of a size of the particle or a density distribution of the particle by using the image information.

10. The light measurement device according to claim 1,

    wherein, when the correction amount is determined, the irradiation unit sets a focal point of the light spot on a member having a light reflectance higher than that of the sample,
    wherein the irradiation unit emits the laser beam with a first power when the correction amount is determined, and
    wherein the irradiation unit emits the laser beam with a second power larger than the first power when the sample is measured.

11. The light measurement device according to claim 5,

    wherein the irradiation unit sets a focal point of the light spot at a first position where a luminance value of an image of the sample is not uniform in the first in-plane direction,
    wherein the arithmetic unit generates the first image information and the second image information obtained by scanning the light spot in the first in-plane direction with the first position as an initial position,
    wherein the irradiation unit sets the focal point of the light spot at a second position where the luminance value of the image of the sample is not uniform in the second in-plane direction, and
    wherein the arithmetic unit generates the third image information and the fourth image information obtained by scanning the light spot in the second in-plane direction with the second position as an initial position.

12. A light measurement method for measuring a sample by irradiating the sample with light, the method comprising:

    irradiating a sample with a laser beam emitted from a light source;
    scanning, by using a scanning mirror, a light spot of the laser beam in a plane orthogonal to an optical axis of the laser beam by causing the light spot to reciprocate in a first orientation and a second orientation opposite to the first orientation;
    detecting, as a detection signal, a light amount optically obtained by the scanning;
    generating first image information of the sample from the detection signal when the light spot is moved in the first orientation;
    generating second image information of the sample from the detection signal when the light spot is moved in the second orientation; and
    determining a correction amount for correcting an operation delay of the scanning mirror based on the first image information and the second image information.

# FIG. 1

(SMALL PARTICLE)  (LARGE PARTICLE)

(SIGNAL LEVEL DISTRIBUTION)

# FIG. 2

# FIG. 3A

# FIG. 3B

TEST SAMPLE

Z

Y⊗ → X

202

DRIVE CIRCUIT    X, Y

DETECTION OPTICAL SYSTEM    I, Q

A/D CONVERTER

CPU

## FIG. 4A

## FIG. 4B

## FIG. 5A

IMAGE SIGNAL

SCANNING CONDITION

CONTROL DEVICE

28

INTENSITY SIGNAL IMAGING CIRCUIT

27

11

14
LIGHT SOURCE

15

16

17

26

25

22

22b

22a

23

19

18

23a

23b

20

21

13

24

12

# FIG. 5B

## FIG. 6A

## FIG. 6B

# FIG. 7A

703

702

701

# FIG. 7B

710

706

705

703

704

701

712

711

# FIG. 8

161

A/D CONVERTER (I, Q, X, Y)

DETERMINE SCANNING DIRECTION

SWITCH

MEASUREMENT IMAGE

Image X+

Image X-

Image Y+

Image Y-

CALCULATE CORRELATION COEFFICIENT

CALCULATE CORRELATION COEFFICIENT

$$C_{++} = \sum_{j=1}^{NY} \sum_{i=1}^{NX} (A_+[j][i] - \widehat{A_+}) \cdot (A_+[j][i] - \widehat{A_+})$$

$$C_{--} = \sum_{j=1}^{NY} \sum_{i=1}^{NX} (A_-[j][i] - \widehat{A_-}) \cdot (A_-[j][i] - \widehat{A_-})$$

$$C_{+-} = \sum_{j=1}^{NY} \sum_{i=1}^{NX} (A_+[j][i] - \widehat{A_+}) \cdot (A_-[j][i] - \widehat{A_-})$$

$$C = \frac{C_{+-}}{\sqrt{C_{++} \cdot C_{--}}}$$

## FIG. 9

## FIG. 10A

Image X+

## FIG. 10B

Image X-

## FIG. 10C

IMAGE FOR
MEASUREMENT

## FIG. 11A

Image X+

## FIG. 11B

Image X-

## FIG. 11C

IMAGE FOR
MEASUREMENT

## FIG. 12A

Image X+

## FIG. 12B

Image X-

## FIG. 12C

IMAGE FOR
MEASUREMENT

## FIG. 13A

## FIG. 13B

# FIG. 14

CORRELATION COEFFICIENT

Well B8:Baxis
[X range: 47760 um]
Mon Dec 26 19:57:22 2022

DELAY CORRECTION PARAMETER

## FIG. 15A

## FIG. 15B

# FIG. 16

```
                    ┌─────────┐
                    │  Start  │
                    └─────────┘
                         │
                         ▼
S1601 ┌──────────────────────────────────────────────────────┐
      │   ALIGN FOCAL POSITION (X, Y) WITH BASE PLATE         │
      └──────────────────────────────────────────────────────┘
                         │
                         ▼
S1602 ┌──────────────────────────────────────────────────────┐
      │  MEASURE SIGNAL AMPLITUDE WHILE SCANNING Z POSITION    │
      │            AROUND BASE PLATE                           │
      └──────────────────────────────────────────────────────┘
                         │
                         ▼
S1603 ┌──────────────────────────────────────────────────────┐
      │             DETERMINE FOCAL POSITION ZO               │
      └──────────────────────────────────────────────────────┘
                         │
                         ▼
S1604 ┌──────────────────────────────────────────────────────┐
      │             ACQUIRE MEASUREMENT SIGNAL                │
      └──────────────────────────────────────────────────────┘
                         │
                         ▼
S1605 ┌──────────────────────────────────────────────────────┐
      │  MEASURE CORRELATION COEFFICIENT BETWEEN ImageX+      │
      │  AND ImageX- WHILE CHANGING CORRECTION AMOUNT OF       │
      │     OPERATION DELAY AMOUNT IN X DIRECTION             │
      └──────────────────────────────────────────────────────┘
                         │
                         ▼
S1606 ┌──────────────────────────────────────────────────────┐
      │  DETERMINE OPTIMUM CORRECTION AMOUNT WITH WHICH       │
      │  CORRELATION COEFFICIENT IN X DIRECTION IS MAXIMIZED  │
      └──────────────────────────────────────────────────────┘
                         │
                         ▼
S1607 ┌──────────────────────────────────────────────────────┐
      │  MEASURE CORRELATION COEFFICIENT BETWEEN ImageY+      │
      │  AND ImageY- WHILE CHANGING CORRECTION AMOUNT OF       │
      │     OPERATION DELAY AMOUNT IN Y DIRECTION             │
      └──────────────────────────────────────────────────────┘
                         │
                         ▼
S1608 ┌──────────────────────────────────────────────────────┐
      │  DETERMINE OPTIMUM CORRECTION AMOUNT WITH WHICH       │
      │  CORRELATION COEFFICIENT IN Y DIRECTION IS MAXIMIZED  │
      └──────────────────────────────────────────────────────┘
                         │
                         ▼
S1609 ┌──────────────────────────────────────────────────────┐
      │  MEASURE SIZE AND DENSITY DISTRIBUTION OF SAMPLE      │
      └──────────────────────────────────────────────────────┘
                         │
                         ▼
                    ┌─────────┐
                    │   End   │
                    └─────────┘
```

# FIG. 17

Start

S1701 | INITIALIZE MEASUREMENT CONDITION AND PARTICLE DATA

S1702 | ADJUST MEASUREMENT CONDITION

S1703 | DETERMINE WHETHER OR NOT IT IS NECESSARY TO UPDATE CORRECTION AMOUNT OF OPERATION DELAY AMOUNT — NO

YES

S1704 | UPDATE CORRECTION AMOUNT OF OPERATION DELAY AMOUNT

S1705 | MEASURE SIZE AND DENSITY DISTRIBUTION OF SAMPLE

End

# FIG. 18

SAMPLE          CONTAINER

# FIG. 19

# FIG. 20

# FIG. 21

```
                          ┌─────────┐
                          │  Start  │
                          └─────────┘
                               │
                               ▼
S2101 ┌──────────────────────────────────────────────────────┐
      │  MOVE LIGHT SPOT TO PREDETERMINED POSITION (X1, Y1)   │
      └──────────────────────────────────────────────────────┘
                               │
                               ▼
S2102 ┌──────────────────────────────────────────────────────┐
      │  MEASURE SIGNAL WHILE SCANNING Z POSITION, AND        │
      │  DETERMINE FOCAL POSITION Z1                          │
      └──────────────────────────────────────────────────────┘
                               │
                               ▼
S2103 ┌──────────────────────────────────────────────────────┐
      │                SIGNAL MEASUREMENT                     │
      └──────────────────────────────────────────────────────┘
                               │
                               ▼
S2104 ┌──────────────────────────────────────────────────────┐
      │  OBTAIN CORRELATION BETWEEN IMAGE (X+) AND IMAGE (X-) │
      │  WHILE CHANGING CORRECTION AMOUNT IN X DIRECTION      │
      └──────────────────────────────────────────────────────┘
                               │
                               ▼
S2105 ┌──────────────────────────────────────────────────────┐
      │  MOVE LIGHT SPOT TO PREDETERMINED POSITION (X2, Y2)   │
      └──────────────────────────────────────────────────────┘
                               │
                               ▼
S2106 ┌──────────────────────────────────────────────────────┐
      │  MEASURE SIGNAL WHILE SCANNING Z POSITION, AND        │
      │  DETERMINE FOCAL POSITION Z2                          │
      └──────────────────────────────────────────────────────┘
                               │
                               ▼
S2107 ┌──────────────────────────────────────────────────────┐
      │                SIGNAL MEASUREMENT                     │
      └──────────────────────────────────────────────────────┘
                               │
                               ▼
S2108 ┌──────────────────────────────────────────────────────┐
      │  OBTAIN CORRELATION BETWEEN IMAGE (Y+) AND IMAGE (Y-) │
      │  WHILE CHANGING CORRECTION AMOUNT IN Y DIRECTION      │
      └──────────────────────────────────────────────────────┘
                               │
                               ▼
S2109 ┌──────────────────────────────────────────────────────┐
      │  OBTAIN SIZE AND DENSITY DISTRIBUTION OF SAMPLE       │
      └──────────────────────────────────────────────────────┘
                               │
                               ▼
                          ┌─────────┐
                          │   End   │
                          └─────────┘
```

## INTERNATIONAL SEARCH REPORT

| International application No. |
|---|
| **PCT/JP2023/040642** |

| A. | CLASSIFICATION OF SUBJECT MATTER |
|---|---|

*G01B 11/08*(2006.01)i
FI:   G01B11/08 G

According to International Patent Classification (IPC) or to both national classification and IPC

| B. | FIELDS SEARCHED |
|---|---|

Minimum documentation searched (classification system followed by classification symbols)

G01B11/08; G01N15/02; G02B26/10

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | JP 2003-131151 A (CANON KABUSHIKI KAISHA) 08 May 2003 (2003-05-08) paragraphs [0001]-[0165], fig. 1-14 | 1-2, 4-12 |
| A | | 3 |
| Y | WO 2020/144754 A1 (HITACHI HIGH-TECH CORPORATION) 16 July 2020 (2020-07-16) paragraphs [0001]-[0105], fig. 1-24 | 1-2, 4-12 |
| A | | 3 |
| A | JP 2005-242037 A (CANON KABUSHIKI KAISHA) 08 September 2005 (2005-09-08) paragraphs [0001]-[0106], fig. 1-17 | 1-12 |

☐ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **13 December 2023** | **26 December 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

INTERNATIONAL SEARCH REPORT
Information on patent family members

International application No.

**PCT/JP2023/040642**

| Patent document cited in search report | | | Publication date (day/month/year) | Patent family member(s) | | | Publication date (day/month/year) |
|---|---|---|---|---|---|---|---|
| JP | 2003-131151 | A | 08 May 2003 | US | 2003/0021497 | A1 | |
| | | | | paragraphs [0001]-[0219], fig. 1-14B | | | |
| | | | | EP | 1275998 | A1 | |
| | | | | KR | 10-2003-0007118 | A | |
| WO | 2020/144754 | A1 | 16 July 2020 | US | 2022/0065766 | A1 | |
| | | | | paragraphs [0001]-[0117], fig. 1-24 | | | |
| | | | | EP | 3910315 | A1 | |
| | | | | CN | 113227759 | A | |
| JP | 2005-242037 | A | 08 September 2005 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2017102032 A
- WO 2020144754 A
- JP 2011154312 A